# EUROPEAN PATENT SPECIFICATION

(11) **EP 3 378 894 B1**
(45) Date of publication and mention of the grant of the patent: **22.01.2020**
(21) Application number: 18162899.1
(22) Date of filing: 20.03.2018
(51) Int. Cl.: C08L 15/00, F16K 31/06, F16J 15/10, F16K 11/07, F16K 25/00

(54) **SEAL**
DICHTUNG
JOINT

(30) Priority: 22.03.2017 JP 2017055870
(43) Date of publication of application: 26.09.2018
(73) Proprietor: MITSUBISHI CABLE INDUSTRIES, LTD., Chiyoda-ku Tokyo 100-8303 (JP)
(72) Inventor: HIRANO, Kosei, Wakayama 649-0304 (JP); IKEHARA, Junichiro, Wakayama 649-0304 (JP); NISHIMURA, Yutaka, Wakayama 649-0304 (JP); NISHIKAWA, Tomoki, Wakayama 649-0304 (JP); MIYASHIRO, Hiroki, Wakayama 649-0304 (JP)
(74) Representative: Agasse, Stéphane

(56) References cited:
- EP-A1- 2 644 678
- EP-A1- 2 700 692
- DATABASE WPI Week 201716 Thomson Scientific, London, GB; AN 2017-11081K XP002783233, & JP 2017 032029 A (NIPPON VALQUA IND LTD) 9 February 2017 (2017-02-09)
- DATABASE WPI Week 200873 Thomson Scientific, London, GB; AN 2008-M49159 XP002783234, & WO 2008/108175 A1 (EAGLE IND CO LTD) 12 September 2008 (2008-09-12)

## Description

### TECHNICAL FIELD

The present invention relates to a seal.

### BACKGROUND

A seal made of a rubber composition containing a hydrogenated nitrile-butadiene rubber as a rubber component has been known. Japanese unexamined patent publication No. 2013-142147 discloses a seal for a sliding portion. The seal is made of a rubber composition obtained by cross-linking, using an organic peroxide, a hydrogenated nitrile-butadiene rubber to which fluororesin powder and a carbon black are added.

### SUMMARY

In an air pressure solenoid valve, a packing as a seal outwardly or inwardly fitted to a spool expands when it comes into contact with drain, which is a mixture of water and oil contained in compressed air. The expanded packing increases a sliding resistance with a housing, which may result in poor performance of the valve and shorter lifetime of the product.

Thus, the present invention is intended to provide a seal having a small degree of expansion in contact with drain and good formability.

The present invention is directed to a seal made of a rubber composition containing a hydrogenated nitrile-butadiene rubber as a main part of a rubber component. The rubber component contains: a first hydrogenated nitrile-butadiene rubber which has an acrylonitrile content comprised between 48.0% by mass and 52.0% by mass; and a second hydrogenated nitrile-butadiene rubber which has an acrylonitrile content which is lower than the acrylonitrile content of the first hydrogenated nitrile-butadiene rubber.

A seal of the present invention is made of a rubber composition containing a hydrogenated nitrile-butadiene rubber as a main part of a rubber component. The rubber component contains a first hydrogenated nitrile-butadiene rubber which has the acrylonitrile content comprised between 48.0% by mass and 52.0% by mass, and a second hydrogenated nitrile-butadiene rubber which has the acrylonitrile content which is lower than that of the first hydrogenated nitrile-butadiene rubber. This configuration allows the seal of the present invention to provide advantages, such as a small degree of expansion in contact with drain and good formability.

In addition, it is preferable that the present invention be configured as will be described below in order to provide said advantages.

The acrylonitrile content of the first hydrogenated nitrile-butadiene rubber is preferably comprised between 48.5% by mass and 51.0% by mass, and more preferably comprised between 49.0% by mass and 50.0% by mass.

The acrylonitrile content of the second hydrogenated nitrile-butadiene rubber is preferably comprised between 18.0% by mass and 47.9% by mass, and more preferably comprised between 36.0% by mass and 45.0% by mass.

A mean acrylonitrile content of the first and second hydrogenated nitrile-butadiene rubbers is preferably comprised between 27.0% by mass and 49.0% by mass, and more preferably comprised between 34.0% by mass and 48.0% by mass.

A content of the first hydrogenated nitrile-butadiene rubber in the rubber component is preferably comprised between 30% by mass and 90% by mass, and more preferably comprised between 60% by mass and 85% by mass, and a content of the second hydrogenated nitrile-butadiene rubber in the rubber component is preferably comprised between 10% by mass and 70% by mass, and more preferably comprised between 15% by mass and 40% by mass.

A content of the first hydrogenated nitrile-butadiene rubber in the rubber component is greater than a content of the second hydrogenated nitrile-butadiene rubber in the rubber component.

It is disclosed that an iodine value of the first hydrogenated nitrile-butadiene rubber which is preferably comprised between 11 mg/100 mg and 50 mg/100 mg, and more preferably comprised between 20 mg/100 mg and 40 mg/100 mg.

It is disclosed an iodine value of the second hydrogenated nitrile-butadiene rubber which is preferably comprised between 7 mg/100 mg and 60 mg/100 mg, and more preferably comprised between 20 mg/100 mg and 40 mg/100 mg.

It is disclosed a mean iodine value of the first and second hydrogenated nitrile-butadiene rubbers which is preferably comprised between 11 mg/100 mg and 50 mg/100 mg, and more preferably comprised between 20 mg/100 mg and 40 mg/100 mg.

The rubber composition contains a secondary aromatic amine-based antioxidant. The rubber composition contains styrenated diphenylamine as the secondary aromatic amine-based antioxidant.

The rubber composition contains a polyether ester-based plasticizer.

The rubber component of the rubber composition is crosslinked by using an organic peroxide as a crosslinker.

The rubber component of the rubber composition is crosslinked by using a co-crosslinker in addition to a crosslinker. The rubber component of the rubber composition is crosslinked by using a liquid rubber, preferably a liquid polybutadiene rubber, as the co-crosslinker.

### BRIEF DESCRIPTION OF THE DRAWINGS

FIG. 1A is a front view of a seal according to an embodiment.
FIG. 1B is a cross-sectional view taken along the line IB-IB in FIG. 1A.
FIG. 2A is a first diagram for explaining how an air pressure solenoid valve works.
FIG. 2B is a second diagram for explaining how the air pressure solenoid valve works.
FIG. 3 is a diagram for explaining a test method for wear resistance.

### DETAILED DESCRIPTION

An embodiment will be described in detail below.

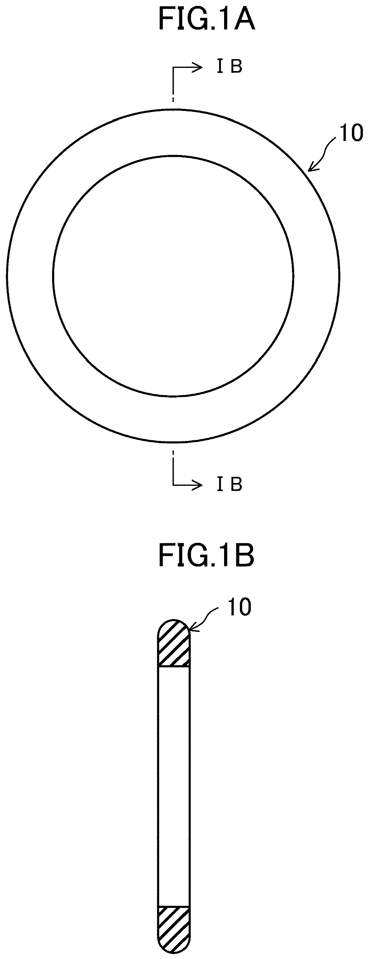

FIGS. 1A and 1B illustrate a seal 10 according to an embodiment. For example, the seal 10 according to this embodiment has a D-shaped cross section and is outwardly fitted to a spool of an air pressure solenoid valve to be used as a packing for reciprocating movement.

The seal 10 according to the embodiment is made of a rubber composition containing a hydrogenated nitrile-butadiene rubber (hereinafter referred to as an "HNBR") as a main part of a rubber component. More specifically, the seal 10 according to the embodiment is made of a rubber composition obtained in the following manner: an uncrosslinked rubber composition is prepared by kneading a rubber component containing an HNBR as a main part to which a compound ingredient including a crosslinker is added; and the uncrosslinked rubber composition is formed into a predetermined shape and is heated and compressed to crosslink the rubber component by the crosslinker, thereby obtaining said rubber composition.

The rubber component contains HNBR as a main part. The content of the HNBR in the rubber component is more than 50% by mass, preferably 90% by mass or more, more preferably 95% by mass or more, and most preferably 100% by mass. Examples of the rubber component besides the HNBR include a nitrile-butadiene rubber (NBR).

The rubber component containing the HNBR as a main part contains a first hydrogenated nitrile-butadiene rubber (hereinafter referred to as a "first HNBR") which has an acrylonitrile content comprised between 48.0% by mass and 52.0% by mass, and a second hydrogenated nitrile-butadiene rubber (hereinafter referred to as a "second HNBR") which has an acrylonitrile content which is lower than the acrylonitrile content of the first HNBR. The seal 10 configured as described above has a small degree of expansion in contact with drain and exhibits good formability, because the seal 10 is made of a rubber composition containing the HNBR as a main part of the rubber component, and the rubber component contains the first HNBR which has the acrylonitrile content comprised between 48.0% by mass and 52.0% by mass, and the second HNBR, which has the acrylonitrile content which is lower than that of the first HNBR. In addition, the seal 10 configured as described above has high extension properties, and is less likely to be torn when the seal 10 is extended while being outwardly fitted to the spool of the air pressure solenoid valve. It is therefore possible to improve the workability and the yields. These advantages seem to be provided by the first HNBR having a higher acrylonitrile content in the rubber component, and the second HNBR having a lower acrylonitrile content in the rubber component. That is, the first HNBR contributes to a small degree of expansion in contact with drain and high extension properties, whereas the second HNBR compensates for the poor formability of the first HNBR.

Examples of the first and second HNBRs include: nitrile/conjugated diene copolymer rubber, a conjugated diene unit of which is hydrogenated; nitrile/conjugated diene/ethylene-based unsaturated monomer terpolymer rubber, a conjugated diene unit of which is hydrogenated; and nitrile/ethylene-based unsaturated monomer copolymer rubber. More specifically, examples of the first and second HNBRs include: substances obtained by hydrogenating, for example, butadiene/acrylonitrile copolymer rubber, isoprene/butadiene/acrylonitrile copolymer rubber, isoprene/acrylonitrile copolymer rubber, and butadiene/methylacrylate/acrylonitrile copolymer rubber; butylacrylate/ethoxy ethyl acrylate/vinyl chloroacetate/acrylonitrile copolymer rubber; and butylacrylate/ethoxy ethyl acrylate/vinyl norbornene/acrylonitrile copolymer rubber. Preferably, each of the first and second HNBRs contains one kind or two or more kinds of these substances.

The content of the first HNBR in the rubber component is preferably comprised between 30% by mass and 90% by mass, and more preferably comprised between 60% by mass and 85% by mass, in order to achieve a small degree of expansion in contact with drain, good formability, and high extension properties. The content of the second HNBR in the rubber component is preferably comprised between 10% by mass and 70% by mass, and more preferably comprised between 15% by mass and 40% by mass, in order to achieve a small degree of expansion in contact with drain, good formability, and high extension properties.

The mass ratio of the content of the first HNBR to the content of the second HNBR (i.e., the first HNBR content/the second HNBR content) is preferably comprised between 30 (the first HNBR)/70 (the second HNBR) and 90 (the first HNBR)/10 (the second HNBR, more preferably comprised between 60 (the first HNBR)/40 (the second HNBR) and 85 (the first HNBR)/15 (the second HNBR), and still more preferably comprised between 70 (the first HNBR)/30 (the second HNBR) and 80 (the first HNBR)/20 (the second HNBR). Preferably, the content of the first HNBR in the rubber component is greater than the content of the second HNBR in the rubber component in order to achieve a small degree of expansion in contact with drain, good formability, and high extension properties, as well as to obtain good resistance to wear.

The acrylonitrile content in the first HNBR is preferably comprised between 48.5% by mass and 51.0% by mass, and more preferably comprised between 49.0% by mass and 50.0% by mass in order to achieve a small degree of expansion in contact with drain and good formability. The acrylonitrile content in the second HNBR is preferably comprised between 18.0% by mass and 47.9% by mass, and more preferably comprised between 36.0% by mass and 45.0% by mass in order to achieve a small degree of expansion in contact with drain and good formability. In a case where the first or second HNBR is made of two or more kinds of HNBRs, the acrylonitrile content of the first or second HNBR is a sum total of the results obtained by multiplying the acrylonitrile content in each of the HNBRs by the fraction of each HNBR with respect to the content of the first or second HNBR.

The mean acrylonitrile content of the first and second HNBRs is preferably comprised between 27.0% by mass and 49.0% by mass, and more preferably comprised between 34.0% by mass and 48.0% by mass in order to achieve a small degree of expansion in contact with drain and good formability. The mean acrylonitrile content of the first and second HNBRs is a sum of the result obtained by multiplying the acrylonitrile content in the first HNBR by the fraction of the first HNBR with respect to the total HNBR content, and the result obtained by multiplying the acrylonitrile content in the second HNBR by the fraction of the second HNBR with respect to the total HNBR content.

An iodine value of the first HNBR is preferably comprised between 11 mg/100 mg and 50 mg/100 mg, and more preferably comprised between 20 mg/100 mg and 40 mg/100 mg, in order to achieve good physical properties, such as the permanent compression set. An iodine value of the second HNBR is preferably comprised between 7 mg/100 mg and 60 mg/100 mg, and more preferably comprised between 20 mg/100 mg and 40 mg/100 mg, in order to achieve good physical properties, such as the permanent compression set. In a case where the first or second HNBR is made of two or more kinds of HNBRs, the iodine value of the first or second HNBR is a sum total of the results obtained by multiplying the iodine value of each of the HNBRs by the fraction of each HNBR with respect to the content of the first or second HNBR.

The mean iodine value of the first and second HNBRs is preferably comprised between 11 mg/100 mg and 50 mg/100 mg, and more preferably comprised between 20 mg/100 mg and 40 mg/100 mg, in order to achieve good physical properties, such as the permanent compression set. The mean iodine value of the first and second HNBRs is a sum of the result obtained by multiplying the iodine value of the first HNBR by the fraction of the first HNBR with respect to the total HNBR content, and the result obtained by multiplying the iodine value of the second HNBR by the fraction of the second HNBR with respect to the total HNBR content.

The Mooney viscosity of the first HNBR at 100°C is preferably comprised between 50 ML₁₊₄ (100°C) and 100 ML₁₊₄ (100°C), and more preferably comprised between 60 ML₁₊₄ (100°C) and 90 ML₁₊₄ (100°C), in order to achieve a small degree of expansion in contact with drain and good formability. The Mooney viscosity of the second HNBR at 100°C is preferably comprised between 50 ML₁₊₄ (100°C) and 120 ML₁₊₄ (100°C), and more preferably comprised between 60 ML₁₊₄ (100°C) and 90 ML₁₊₄ (100°C), in order to achieve a small degree of expansion in contact with drain and good formability. The Mooney viscosity is measured based on JIS K6300.

Examples of the compound ingredients include an antioxidant, a processing aid, a reinforcing agent, a plasticizer, a crosslinker, and a co-crosslinker.

Examples of the antioxidant contained in the rubber composition making the seal 10 of the embodiment include a secondary aromatic amine-based antioxidant, an amine/ketone-based antioxidant, and a benzimidazole-based antioxidant. Examples of the secondary aromatic amine-based antioxidant include styrenated diphenylamine, N-phenyl-1-naphthylamine, alkylated diphenylamine, octylated diphenylamine, 4,4'-bis(α,α-dimethyl benzyl) diphenylamine, p-(p-toluenesulfonylamide) diphenylamine, N,N'-di-2-naphthyl-p-phenylenediamine, N,N'-diphenyl-p-phenylenediamine, N-phenyl-N'-isopropyl-p-phenylenediamine, N-phenyl-N'-(1,3-dimethylbutyl)-p-phenylenediamine, and N-phenyl-N'-(3-methacryloyloxy-2-hydroxypropyl)-p-phenylenediamine. Other examples include quinoline-based antioxidants, hydroquinone derivative antioxidants, monophenol-based antioxidants, bis, tris, polyphenol-based antioxidants, thiobisphenol-based antioxidants, and hindered phenol-based antioxidants. The rubber composition making the seal 10 of the embodiment preferably contains one kind or two or more kinds of these substances, and more preferably contains a secondary aromatic amine-based antioxidant and still more preferably contains a styrenated diphenylamine in order to achieve a small degree of expansion in contact with drain and good formability. The content of the antioxidant in the rubber composition is, for example, comprised between 0.5 parts by mass and 10 parts by mass with respect to 100 parts by mass of the rubber component.

Examples of the processing aid contained in the rubber composition making the seal 10 of the embodiment include a stearic acid, polyethylene wax, a metal salt of fatty acid, a fatty acid amide, a fatty acid ester, and fatty alcohol. Preferably, the rubber composition making the seal 10 of the embodiment contains one kind or two or more kinds of these substances. The content of the processing aid in the rubber composition is, for example, comprised between 0.5 parts by mass and 10 parts by mass with respect to 100 parts by mass of the rubber component.

Examples of the reinforcing agent contained in the rubber composition making the seal 10 of the embodiment include carbon black and silica. Examples of the carbon black include: channel black; furnace black such as SAF, ISAF, N-339, HAF, N-351, MAF, FEF, SRF, GPF, ECF, and N-234; thermal black such as FT and MT; and acetylene black. Examples of silica include dry silica and wet silica. Preferably, the rubber composition making the seal 10 of the embodiment contains one kind or two or more kinds of these substances. The content of the reinforcing agent in the rubber composition is, for example, comprised between 10 parts by mass and 100 parts by mass with respect to 100 parts by mass of the rubber component.

Examples of the plasticizer contained in the rubber composition making the seal 10 of the embodiment include a polyether ester-based plasticizer, an adipic acid ether ester-based plasticizer, and a trimellitic acid isononyl ester plasticizer. Examples of the polyether ester-based plasticizer include: polyethylene glycol butanoic acid ester, polyethylene glycol isobutane acid ester, polyethylene glycol di(2-ethylbutyric acid) ester, polyethylene glycol (2-ethylhexyl acid) ester, polyethylene glycol decanoic acid ester, adipic acid dibutoxyethanol, adipic acid di(butyldiglycol), adipic acid di(butylpolyglycol), adipic acid di(2-ethylhexyloxy ethanol), adipic acid di(2-ethylhexyl diglycol), adipic acid di(2-ethylhexyl polyglycol), adipic acid dioctoxy ethanol, adipic acid di(octyl diglycol), and adipic acid di(octyl polyglycol). The rubber composition making the seal 10 of the embodiment preferably contains one kind or two or more kinds of these substances, and more preferably contains an polyether ester-based plasticizer in order to achieve a small degree of expansion in contact with drain and good formability. The content of the plasticizer in the rubber composition is, for example, comprised between 0.5 parts by mass and 20 parts by mass with respect to 100 parts by mass of the rubber component.

The rubber component of the rubber composition making the seal 10 of the embodiment may be crosslinked by using an organic peroxide as a crosslinker, or may be crosslinked by using sulfur as a crosslinker, or further may be crosslinked by using both sulfur and an organic peroxide as crosslinkers. Preferably, the rubber component of the rubber composition making the seal 10 of the embodiment is crosslinked by using at least an organic peroxide as a crosslinker. In a case where an organic peroxide is used, the content of the organic peroxide is, for example, comprised between 1 part by mass and 10 parts by mass with respect to 100 parts by mass of the rubber component.

Preferably, the rubber component of the rubber composition making the seal 10 of the embodiment is crosslinked by a crosslinker and a co-crosslinker, as well. Examples of the co-crosslinker include liquid rubber, such as liquid polybutadiene rubber and liquid nitrile-butadiene rubber, trimethylolpropane trimethacrylate, ethylene glycol dimethacrylate, triallyl isocyanurate, and N,N'-m-phenylenebismaleimide. It is preferable to use one kind or two or more kinds of these substances as the co-crosslinker. Preferably liquid rubber, and more preferably liquid polybutadiene, is used in order to achieve a small degree of expansion in contact with drain and good formability. The content of the co-crosslinker is, for example, comprised between 1 part by mass and 20 parts by mass with respect to 100 parts by mass of the rubber component.

The rubber hardness of the rubber composition making the seal 10 of the embodiment is preferably comprised between 60 Hs (JIS A) and 95 Hs (JIS A), and more preferably comprised between 70 Hs (JIS A) and 90 Hs (JIS A). The rubber hardness is measured based on a spring-type hardness test specified in JIS K6253.

The tensile strength T_{B} of the rubber composition making the seal 10 of the embodiment is preferably comprised between 10 MPa and 50 MPa, and more preferably comprised between 15 MPa and 40 MPa. The extension E_{B} of the rubber composition making the seal 10 of the embodiment is preferably comprised between 100% and 500%, and more preferably comprised between 300% and 400%. The tensile stress M₁₀₀, at 100% extension, of the rubber composition making the seal 10 of the embodiment is preferably comprised between 5 MPa and 20 MPa, and more preferably comprised between 7 MPa and 15 MPa. The tensile strength T_{B}, extension E_{B}, and tensile stress M₁₀₀ at 100% extension are measured based on JIS K6251.

The permanent compression set of the rubber composition making the seal 10 of the embodiment is preferably 50% or less and more preferably 30% or less. The permanent compression set is measured based on JIS K6262 at a test temperature of 120°C and test time of 72 hours.

Now, a method for forming the seal 10 according to the embodiment will be described.

First, a rubber component containing the first and second HNBRs is placed in a rubber mixer, such as a Banbury mixer, a kneader, and open rolls, and is masticated. Various kinds of compound ingredients are added thereto and kneaded, thereby preparing an uncrosslinked rubber composition.

Then, a cavity formed in a mold to have a shape of the seal 10 is filled with a predetermined amount of the prepared uncrosslinked rubber composition. The mold is closed, and heated and pressurized for a predetermined period of time to have the uncrosslinked rubber composition undergo a primary vulcanization, thereby obtaining a primary vulcanizate. The processing temperature is comprised between 160°C and 190°C, for example. The processing time is comprised between 3 minutes and 30 minutes, for example.

The primary vulcanizate is removed from the mold, then put into an oven, and heated for a predetermine period of time to have the primary vulcanizate undergo a secondary vulcanization. The seal 10 of the embodiment is obtained in this manner. The set temperature of the oven is comprised between 130°C and 180°C, for example. The heating time is between 0.5 to 10 hours, for example.

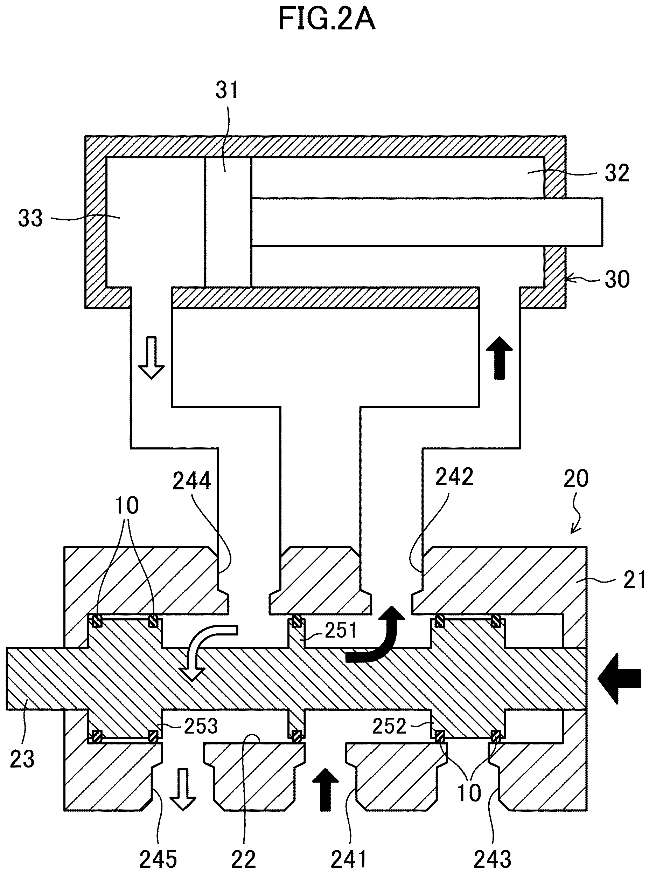

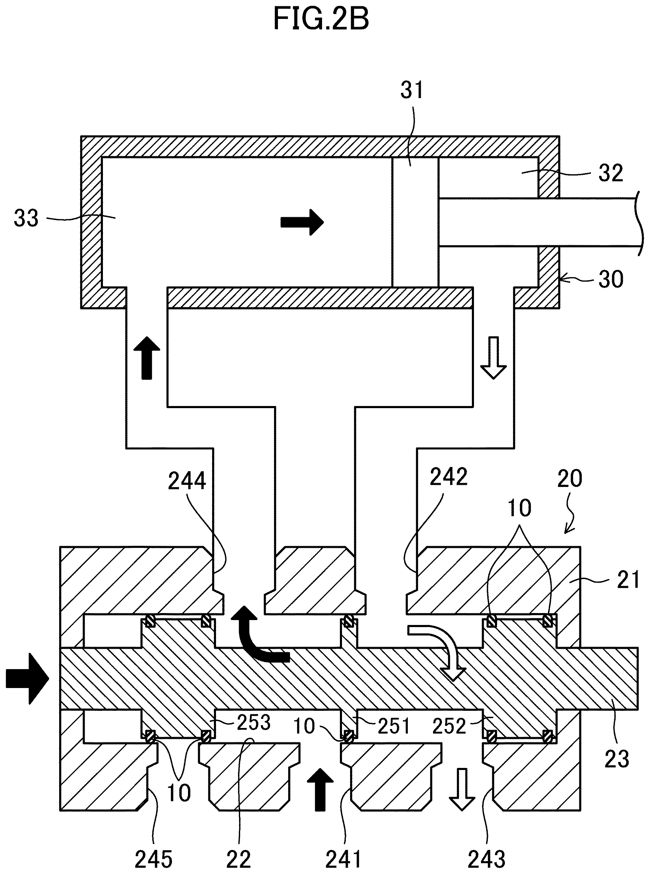

FIGS. 2A and 2B illustrate an air pressure solenoid valve 20 using the seal 10 of the embodiment.

The air pressure solenoid valve 20 has a housing 21. The housing 21 is provided with a spool insertion hole 22. A spool 23 is inserted in the spool insertion hole 22. The housing 21 is also provided with a first port 241 which communicates with the spool insertion hole 22, and third and fifth ports 243 and 245 which also communicate with the spool insertion hole 22 and arranged on both sides of the first port 241 in an axial direction of the spool insertion hole 22. The housing 21 is further provided with a second port 242 at a position corresponding to a portion between the first and third ports 241 and 243, and a fourth port 244 at a position corresponding to a portion between the first and fifth ports 241 and 245. The second and fourth ports 242 and 244 are provided so as to be opposed to the first, third, and fifth ports 241, 243, and 245. The second and fourth ports 242 and 244 communicate with the spool insertion hole 22. The first port 241 is connected to an air pressure source (not shown). The second port 242 communicates with one space 32 in an air cylinder 30 divided by a movable member 31 disposed in the air cylinder 30. The fourth port 244 communicates with the other space 33 in the air cylinder 30 divided by the movable member 31 disposed in the air cylinder 30. The spool 23 is provided with a first flange portion 251 at its longitudinal midpoint. The first flange portion 251 has an increased diameter and is thin. The spool 23 is also provided with second and third flange portions 252 and 253 on both sides of the first flange portion 251 in the longitudinal direction of the spool 23. Each of the second and third flange portions 252 and 253 has an increased diameter and is thick. The first flange portion 251 is provided with a groove at a middle portion in the thickness direction of the first flange portion 251. The groove has a squared U-shaped cross section and extends along the entire circumference of the first flange portion 251. The seal 10 of the embodiment is fitted into the square U-shaped groove. Each of the second and third flange portions 252 and 253 is provided with grooves at end portions in the thickness direction of the second and third flange portions 252 and 253. Each of the grooves has a squared U-shaped cross section and extends along the entire circumference of the second and third flange portions 252 and 253. The seal 10 of the embodiment is fitted into each of the square U-shaped grooves. The five seals 10 of the embodiment outwardly fitted to the spool 23 intervene between the housing 21 and the spool 23, and come into sliding contacts with an inner wall of the spool insertion hole 22.

As illustrated in FIG. 2A, when the spool 23 is positioned at the left side in the housing 21, the air pressure solenoid valve 20 configured as described above allows the first and second ports 241 and 242 to communicate with each other and the fourth and fifth ports 244 and 245 to communicate with each other, and also allows the first flange portion 251 provided with the seal 10 of the embodiment to separate the first and second ports 241 and 242 from the fourth and fifth ports 244 and 245 and allows the second flange portion 525 provided with the seal 10 of the embodiment to close the third port 243. At this moment, compressed air from the first port 241 flows into the one space 32 in the air cylinder 30 via the second port 242, causing the movable member to move toward the left, and the air in the other space 33 to be released toward the fifth port 245 via the fourth port 244.

On the other hand, as illustrated in FIG. 2B, when the spool 23 is positioned at the right side in the housing 21, the air pressure solenoid valve 20 allows the first and fourth ports 241 and 244 to communicate with each other and the second and third ports 242 and 243 to communicate with each other, and also allows the first flange portion 251 provided with the seal 10 of the embodiment to separate the first and fourth ports 241 and 244 from the second and third ports 242 and 243 and allows the third flange portion 253 provided with the seal 10 of the embodiment to close the fifth port 245. At this moment, compressed air from the first port 241 flows into the other space 33 in the air cylinder 30 via the fourth port 244, causing the movable member to move toward the right, and the air in the one space 32 to be released toward the third port 243 via the second port 242.

Even if the compressed air supplied from the first port 241 during this operation contains drain, which is a mixture of water and oil, an increase in the sliding resistance between the spool 23 and the housing 21 due to the expansion of the seal 10 is less likely to occur because the seal 10 of the embodiment has a small degree of expansion in contact with drain. Thus, lifetime of the air pressure solenoid valve 20 of the product can be increased. In addition, the seal 10 of the embodiment has high extension properties, and is less likely to be torn when the seal 10 is extended while being outwardly fitted to the spool 23. It is therefore possible to improve the workability and the yields.

The seal 10 of this embodiment has a D-shaped cross section as a non-limiting example. The seal 10 may also be a squeeze packing, such as an O-ring, having a circular cross section, or may also be a lip packing, such as a U packing.

### [Examples]

### (Uncrosslinked Rubber Composition)

The following uncrosslinked rubber compositions of Examples 1 to 7 and Comparative Examples 1 and 2 were prepared. Constituents of each uncrosslinked rubber compositions will also be shown in Tables 1 and 2.

### <Example 1>

A first rubber component as the first HNBR (combined acrylonitrile amount: 49.2% by mass; and iodine value: 23 mg/100 mg) and a second rubber component as the second HNBR (combined acrylonitrile amount: 44.2% by mass; and iodine value: 24 mg/100 mg) were mixed together at a mass ratio of 90/10 (the first rubber component/the second rubber component). To 100 parts by mass of this rubber component, 2 parts by mass of styrenated diphenylamine as the secondary aromatic amine-based antioxidant, 4.5 parts by mass of the processing aid, 60 parts by mass of carbon black as the reinforcing agent, 5 parts by mass of the polyether ester-based plasticizer, 5 parts by mass of organic peroxide as the crosslinker, and 3 parts by mass of liquid polybutadiene rubber as the co-crosslinker were added and kneaded to make an uncrosslinked rubber composition. This uncrosslinked rubber composition was referred to as Example 1.

### <Example 2>

An uncrosslinked rubber composition of Example 2 was prepared which has the same configurations as that of Example 1 except that the mass ratio between the first and second rubber components was set to be 85/15 (the first rubber component/the second rubber component).

### <Example 3>

An uncrosslinked rubber composition of Example 3 was prepared which has the same configurations as that of Example 1 except that the mass ratio between the first and second rubber components was set to be 80/20 (the first rubber component/the second rubber component).

### <Example 4>

An uncrosslinked rubber composition of Example 4 was prepared which has the same configurations as that of Example 1 except that the mass ratio between the first and second rubber components was set to be 70/30 (the first rubber component/the second rubber component).

### <Example 5>

An uncrosslinked rubber composition of Example 5 was prepared which has the same configurations as that of Example 1 except that the mass ratio between the first and second rubber components was set to be 60/40 (the first rubber component/the second rubber component).

### <Example 6>

An uncrosslinked rubber composition of Example 6 was prepared which has the same configurations as that of Example 1 except that the mass ratio between the first and second rubber components was set to be 50/50 (the first rubber component/the second rubber component).

### <Example 7>

An uncrosslinked rubber composition of Example 7 was prepared which has the same configurations as that of Example 1 except that the mass ratio between the first and second rubber components was set to be 30/70 (the first rubber component/the second rubber component).

### <Comparative Example 1>

An uncrosslinked rubber composition of Comparative Example 1 was prepared which has the same configurations as that of Example 1 except that the rubber component was made of only the first rubber component of the first HNBR.

### <Comparative Example 2>

An uncrosslinked rubber composition of Comparative Example 2 was prepared which has the same configurations as that of Comparative Example 1 except that the rubber component was made of only the second rubber component of the second HNBR.

**[Table 1]**

| | | Example | | | | | | |
|---|---|---|---|---|---|---|---|---|
| | | 1 | 2 | 3 | 4 | 5 | 6 | 7 |
| First HNBR | | 90 | 85 | 80 | 70 | 60 | 50 | 30 |
| Second HNBR | | 10 | 15 | 20 | 30 | 40 | 50 | 70 |
| Antioxidant | | 2 | 2 | 2 | 2 | 2 | 2 | 2 |
| Processing Aid | | 4.5 | 4.5 | 4.5 | 4.5 | 4.5 | 4.5 | 4.5 |
| Reinforcing Agent | | 60 | 60 | 60 | 60 | 60 | 60 | 60 |
| Plasticizer | | 5 | 5 | 5 | 5 | 5 | 5 | 5 |
| Crosslinker | | 5 | 5 | 5 | 5 | 5 | 5 | 5 |
| Co-Crosslinker | | 3 | 3 | 3 | 3 | 3 | 3 | 3 |
| Total | | 179.5 | 179.5 | 179.5 | 179.5 | 179.5 | 179.5 | 179.5 |
| First HNBR/Second HNBR | | 90/10 | 85/15 | 80/20 | 70/30 | 60/40 | 50/50 | 30/70 |
| Mean Acrylonitrile Content (mass %) | | 48.7 | 48.5 | 48.2 | 47.7 | 47.2 | 46.7 | 45.7 |
| Mean Iodine Value (mg/100 mg) | | 23.1 | 23.2 | 23.2 | 23.3 | 23.4 | 23.5 | 23.7 |
| Vulcanization Conditions | Primary Vulcanization | 170°C 20 minutes | 170°C 20 minutes | 170°C 20 minutes | 170°C 20 minutes | 170°C 20 minutes | 170°C 20 minutes | 170°C 20 minutes |
| | Secondary Vulcanization | 150°C 4 hours | 150°C 4 hours | 150°C 4 hours | 150°C 4 hours | 150°C 4 hours | 150°C 4 hours | 150°C 4 hours |
| Rubber Hardness Hs (JIS-A) | | 82 | 81 | 82 | 81 | 82 | 81 | 81 |
| Tensile Strength T_{B} (MPa) | | 30.5 | 32.3 | 31.2 | 31.6 | 32.4 | 32.5 | 27.1 |
| Extension E_{B} (%) | | 300 | 310 | 305 | 310 | 310 | 300 | 305 |
| | | A | A | A | A | A | A | A |
| 100% Modulus M₁₀₀ (MPa) | | 7.2 | 8.2 | 7.3 | 7.6 | 8.1 | 9.5 | 12.4 |
| Permanent Compression Set (%) | | 12 | 12 | 11 | 11 | 11 | 12 | 10 |
| Resistance to Drain | | 0.22 | 0.26 | 0.29 | 0.31 | 0.34 | 0.38 | 0.35 |
| | | A | A | A | A | A | A | A |
| Resistance to Wear | | 0.2 | 0.2 | 0.2 | 0.3 | 0.3 | 0.4 | 0.4 |
| | | A | A | A | A | A | A | A |
| Formability | Releasability | A | A | A | A | A | A | A |
| | Appearance | A | A | A | A | A | A | A |

**[Table 2]**

| | | Comparative Example | |
|---|---|---|---|
| | | 1 | 2 |
| First HNBR | | 100 | 0 |
| Second HNBR | | 0 | 100 |
| Antioxidant | | 2 | 2 |
| Processing Aid | | 4.5 | 4.5 |
| Reinforcing Agent | | 60 | 60 |
| Plasticizer | | 5 | 5 |
| Crosslinker | | 5 | 5 |
| Co-Crosslinker | | 3 | 3 |
| Total | | 179.5 | 179.5 |
| First HNBR/Second HNBR | | 100/0 | 0/100 |
| Mean Acrylonitrile Content (mass %) | | - | - |
| Mean Iodine Value (mg/100 mg) | | - | - |
| Vulcanization Conditions | Primary Vulcanization | 170°C 20 minutes | 170°C 20 minutes |
| | Secondary Vulcanization | 150°C 4 hours | 150°C 4 hours |
| Rubber Hardness Hs (JIS-A) | | 78 | 81 |
| Tensile Strength T_{B} (MPa) | | 28.8 | 28.9 |
| Extension E_{B} (%) | | 310 | 290 |
| | | A | B |
| 100% Modulus M₁₀₀ (MPa) | | 9.7 | 11.2 |
| Permanent Compression Set (%) | | 12 | 10 |
| Resistance to Drain | | 0.22 | 0.62 |
| | | A | B |
| Resistance to Wear | | 0.2 | 1.0 |
| | | A | B |
| Formability | Releasability | A | A |
| | Appearance | B | A |

### (Test Method)

### <Rubber Hardness>

Test specimens were formed from the uncrosslinked rubber compositions of Examples 1 to 7 and Comparative Examples 1 and 2. The rubber hardness of each test specimen was measured based on a spring-type harness test specified in JIS K6253. The processing temperature and time for the primary vulcanization in the formation of the test specimens were set to be 170°C and 20 minutes. The set temperature and heating time in the oven for the secondary vulcanization were set to be 150°C and 4 hours (the same hereinafter).

### <Tensile Property>

Test specimens were formed from the uncrosslinked rubber compositions of Examples 1 to 7 and Comparative Examples 1 and 2. The tensile hardness T_{B}, extension E_{B}, and tensile stress M₁₀₀ at 100% extension of each test specimen was measured based on JIS K6253.

The following evaluations were performed on the extension E_{B}. The seal is extended while being attached to the spool. If the extension E_{B} is small, the seal may be torn or twisted at this moment, and might not be attached to the spool properly. Thus, the extension E_{B} is a very important physical property in attaching the seal to the spool. Thus, the extension E_{B} of 300% or more was evaluated as "A" and the extension E_{B} of less than 300% was evaluated as "B" in consideration of variations in physical properties with respect to the attachment of the seal.

### <Permanent Compression Set>

Test specimens were formed from the uncrosslinked rubber compositions of Examples 1 to 7 and Comparative Examples 1 and 2. The permanent compression set of each test specimen was measured based on JIS K6262. The test temperature and time were set to be 120°C and 72 hours.

### <Resistance to Drain>

Seals were formed into the similar shape as the seal described in the above embodiment from the uncrosslinked rubber compositions of Examples 1 to 7 and Comparative Examples 1 and 2. Four of the obtained seals were outwardly fitted to a spool, and an initial outer diameter of each of the four seals attached to the spool was measured in this state. Then, the spool with the seals was dipped into drain in a test tube. The temperature of the drain had been adjusted to 70°C. After 1008-hour dipping, the test tube was cooled and the spool was taken out from the drain. The outer diameter of each of the four seals on the spool was measured again. The amount of change in the outer diameter of each of the four seals before and after the drain dipping was divided by the outer diameter before the drain dipping and multiplied by 100. The obtained figures for the four seals were averaged to obtain a dimension change ratio. The dimension change ratio of less than 0.50% was evaluated as "A" and the dimension change ratio of 0.50% or more was evaluated as "B."

### <Resistance to Wear>

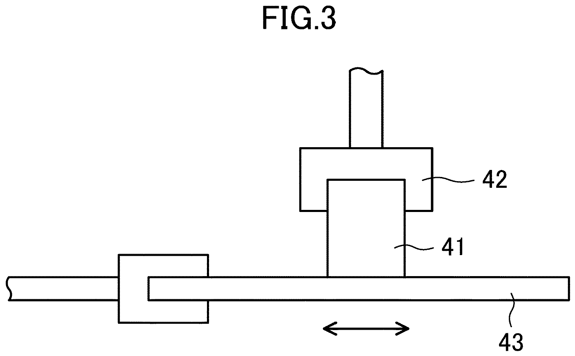

Columnar test specimens having a diameter of 6.3 mm and a height of 8.0 mm were formed from the uncrosslinked rubber compositions of Examples 1 to 7 and Comparative Examples 1 and 2. As illustrated in FIG. 3, a test specimen 41 is fixed by a fixture 42 and pressed against a metal plate 43. In this state, the metal plate 43 was caused to reciprocate such that a bottom surface of the test specimen 41 slides with the metal plate 43. The material for the metal plate 43 was SS400 with a surface roughness Ry of 3.2 and the finish direction orthogonal to the sliding direction. The pressing force of the test specimen 41 against the metal plate 43 was set to be 0.1 MPa. The number of reciprocating movements of the metal plate 43 per minute was set to be 60 times/minute. The stroke of the reciprocating movements of the metal plate 43 was set to be 10 mm. The reciprocating movement of the metal plate 43 was repeated hundred thousand times. A mass reduction amount of the test specimen 41 before and after the test was divided by the specific gravity and bottom surface area of the test specimen 41 to obtain an abrasion amount (mm). Abrasion amount values for the respective test specimens relative to 1 as the abrasion amount of Comparative Example 2 were calculated.

The following evaluations were performed on the relative values of the abrasion amount. It has been confirmed that a correlation exists between the test results presented herein and the results of actual product evaluation. That is, the smaller the relative value of the abrasion amount in the test results is, the better resistance to wear the actual products can exhibit. Thus, based on the actual products to date, the relative values of less than 0.50 was evaluated as "A" and the relative values of 0.50 or more was evaluated as "B."

### <Formability>

The releasability, from the mold, of the moldings made of the uncrosslinked rubber compositions of Examples 1 to 7 and Comparative Examples 1 and 2 was evaluated as "A" if the molding is easily releasable by hand, and as "B" if the molding is not easily releasable by hand. The appearance of the molding was evaluated as "A" if no defect, such as flow, chipping, and flow marks, is found on the surface of the molding from observation through a microscope, and as "B" if any defect is found in the appearance.

### (Test Results)

The test results are shown in Tables 1 and 2.

Tables 1 and 2 show that all the rubber compositions obtained by crosslinking the uncrosslinked rubber compositions of Examples 1 to 7 and Comparative Examples 1 and 2 have generally satisfactory properties for seals (e.g., the rubber hardness, tensile properties, and permanent compression set), except for the slightly small degree of extension of the rubber composition of Comparative Example 2.

All the rubber compositions obtained by crosslinking the uncrosslinked rubber compositions of Examples 1 to 7 have good resistance to drain and good formability in addition to good resistance to wear, which is one of essential properties required for the seals. On the other hand, the rubber composition obtained by crosslinking the uncrosslinked rubber composition of Comparative Example 1 has good resistance to wear and drain, but exhibits poor formability. The rubber composition obtained by crosslinking the uncrosslinked rubber composition of Comparative Example 2 has good formability, but exhibits poor resistance to wear and drain.

### INDUSTRIAL APPLICABILITY

The present invention is useful in the technical field of seals.

## Claims

1. A seal (10) made of a rubber composition containing a hydrogenated nitrile-butadiene rubber as a main part of a rubber component, wherein
the rubber component contains: a first hydrogenated nitrile-butadiene rubber which has an acrylonitrile content comprised between 48.0% by mass and 52.0% by mass; and a second hydrogenated nitrile-butadiene rubber which has an acrylonitrile content which is lower than the acrylonitrile content of the first hydrogenated nitrile-butadiene rubber.

2. The seal of claim 1, wherein
the acrylonitrile content of the first hydrogenated nitrile-butadiene rubber is comprised between 48.5% by mass and 51.0% by mass.

3. The seal of claim 1 or 2, wherein
the acrylonitrile content of the second hydrogenated nitrile-butadiene rubber is comprised between 18.0% by mass and 47.9% by mass.

4. The seal of claims 1 to 3, wherein
a mean acrylonitrile content of the first and second hydrogenated nitrile-butadiene rubbers is comprised between 27.0% by mass and 49.0% by mass.

5. The seal of any one of claims 1 to 4, wherein
a content of the first hydrogenated nitrile-butadiene rubber in the rubber component is comprised between 30% by mass and 90% by mass, and
a content of the second hydrogenated nitrile-butadiene rubber in the rubber component is comprised between 10% by mass and 70% by mass.

6. The seal of any one of claims 1 to 5, wherein
a content of the first hydrogenated nitrile-butadiene rubber in the rubber component is greater than a content of the second hydrogenated nitrile-butadiene rubber in the rubber component.

7. The seal of any one of claims 1 to 6, wherein
the rubber composition contains a secondary aromatic amine-based antioxidant.

8. The seal of claim 7, wherein
the rubber composition contains styrenated diphenylamine as the secondary aromatic amine-based antioxidant.

9. The seal of any one of claims 1 to 8, wherein
the rubber composition contains a polyether ester-based plasticizer.

10. The seal of any one of claims 1 to 9, wherein
the rubber component of the rubber composition is crosslinked by using an organic peroxide as a crosslinker.

11. The seal of any one of claims 1 to 10, wherein
the rubber component of the rubber composition is crosslinked by using a co-crosslinker in addition to a crosslinker.

12. The seal of claim 11, wherein
the rubber component of the rubber composition is crosslinked by using a liquid rubber, preferably a liquid polybutadiene rubber, as the co-crosslinker.

## Patentansprüche

1. Dichtung (10), hergestellt aus einer Kautschukzusammensetzung, die einen hydrierten Nitril-Butadien-Kautschuk als Hauptanteil einer Kautschukkomponente enthält, wobei
die Kautschukkomponente Folgendes enthält: einen ersten hydrierten Nitril-Butadien-Kautschuk, der einen Acrylnitril-Gehalt aufweist, der zwischen 48,0 Massenprozent und 52,0 Massenprozent liegt; und einen zweiten hydrierten Nitril-Butadien-Kautschuk, der einen Acrylnitril-Gehalt aufweist, der niedriger als der Acrylnitril-Gehalt des ersten hydrierten Nitril-Butadien-Kautschuks ist.

2. Dichtung nach Anspruch 1, wobei
der Acrylnitril-Gehalt des ersten hydrierten Nitril-Butadien-Kautschuks zwischen 48,5 Massenprozent und 51,0 Massenprozent liegt.

3. Dichtung nach Anspruch 1 oder 2, wobei
der Acrylnitril-Gehalt des zweiten hydrierten Nitril-Butadien-Kautschuks zwischen 18,0 Massenprozent und 47,9 Massenprozent liegt.

4. Dichtung nach Anspruch 1 bis 3, wobei
der durchschnittliche Acrylnitril-Gehalt des ersten und zweiten hydrierten Nitril-Butadien-Kautschuks zwischen 27,0 Massenprozent und 49,0 Massenprozent liegt.

5. Dichtung nach einem der Ansprüche 1 bis 4, wobei
ein Gehalt des ersten hydrierten Nitril-Butadien-Kautschuks in der Kautschukkomponente zwischen 30 Massenprozent und 90 Massenprozent liegt, und
ein Gehalt des zweiten hydrierten Nitril-Butadien-Kautschuks in der Kautschukkomponente zwischen 10 Massenprozent und 70 Massenprozent liegt.

6. Dichtung nach einem der Ansprüche 1 bis 5, wobei
ein Gehalt des ersten hydrierten Nitril-Butadien-Kautschuks in der Kautschukkomponente größer als ein Gehalt des zweiten hydrierten Nitril-Butadien-Kautschuks in der Kautschukkomponente ist.

7. Dichtung nach einem der Ansprüche 1 bis 6, wobei
die Kautschukzusammensetzung ein sekundäres aromatisches aminbasiertes Antioxidationsmittel enthält.

8. Dichtung nach Anspruch 7, wobei
die Kautschukzusammensetzung styrolisiertes Diphenylamin als das sekundäre aromatische am inbasierte Antioxidationsmittel enthält.

9. Dichtung nach einem der Ansprüche 1 bis 8, wobei
die Kautschukzusammensetzung einen polyetheresterbasierten Weichmacher enthält.

10. Dichtung nach einem der Ansprüche 1 bis 9, wobei
die Kautschukkomponente der Kautschukzusammensetzung unter Verwendung eines organischen Peroxids als Vernetzungsmittel vernetzt ist.

11. Dichtung nach einem der Ansprüche 1 bis 10, wobei
die Kautschukkomponente der Kautschukzusammensetzung unter Verwendung eines Co-Vernetzungsmittels zusätzlich zu einem Vernetzungsmittel vernetzt ist.

12. Dichtung nach Anspruch 11, wobei
die Kautschukkomponente der Kautschukzusammensetzung unter Verwendung eines flüssigen Kautschuks, vorzugsweise eines flüssigen Polybutadien-Kautschuks, als Vernetzungsmittel vernetzt ist.

## Revendications

1. Joint (10) réalisé à partir d'une composition de caoutchouc contenant un caoutchouc nitrile-butadiène hydrogéné en tant que partie principale d'un composant de caoutchouc, dans lequel
le composant de caoutchouc contient : un premier caoutchouc nitrile-butadiène hydrogéné qui a une teneur en acrylonitrile comprise entre 48,0% en masse et 52,0% en masse ; et un deuxième caoutchouc nitrile-butadiène hydrogéné qui a une teneur en acrylonitrile qui est inférieure à la teneur en acrylonitrile du premier caoutchouc nitrile-butadiène hydrogéné.

2. Joint de la revendication 1, dans lequel
la teneur en acrylonitrile du premier caoutchouc nitrile-butadiène hydrogéné est comprise entre 48,5% en masse et 51,0% en masse.

3. Joint de la revendication 1 ou 2, dans lequel
la teneur en acrylonitrile du deuxième caoutchouc nitrile-butadiène hydrogéné est comprise entre 18,0% en masse et 47,9% en masse.

4. Joint des revendications 1 à 3, dans lequel
la teneur moyenne en acrylonitrile des premier et deuxième caoutchoucs nitrile-butadiène hydrogénés est comprise entre 27,0% en masse et 49,0% en masse.

5. Joint de l'une quelconque des revendications 1 à 4, dans lequel
la teneur du premier caoutchouc nitrile-butadiène hydrogéné dans le composant de caoutchouc est comprise entre 30% en masse et 90% en masse, et
la teneur du deuxième caoutchouc nitrile-butadiène hydrogéné dans le composant de caoutchouc est comprise entre 10% en masse et 70% en masse.

6. Joint de l'une quelconque des revendications 1 à 5, dans lequel
la teneur du premier caoutchouc nitrile-butadiène hydrogéné dans le composant de caoutchouc est supérieure à la teneur du deuxième caoutchouc nitrile-butadiène hydrogéné dans le composant de caoutchouc.

7. Joint de l'une quelconque des revendications 1 à 6, dans lequel
la composition de caoutchouc contient un antioxydant à base d'amine aromatique secondaire.

8. Joint de la revendication 7, dans lequel
la composition de caoutchouc contient une diphénylamine styrénée comme étant l'antioxydant à base d'amine aromatique secondaire.

9. Joint de l'une quelconque des revendications 1 à 8, dans lequel
la composition de caoutchouc contient un plastifiant à base de polyéther ester.

10. Joint de l'une quelconque des revendications 1 à 9, dans lequel
le composant de caoutchouc de la composition de caoutchouc est réticulé en utilisant un peroxyde organique en tant qu'agent de réticulation.

11. Joint de l'une quelconque des revendications 1 à 10, dans lequel
le composant de caoutchouc de la composition de caoutchouc est réticulé en utilisant un agent de co-réticulation en plus d'un agent de réticulation.

12. Joint de la revendication 11, dans lequel
le composant de caoutchouc de la composition de caoutchouc est réticulé en utilisant un caoutchouc liquide, de préférence un caoutchouc polybutadiène liquide, comme étant l'agent de co-réticulation.
